# EUROPEAN PATENT SPECIFICATION

(11) **EP 0 603 717 B1**
(45) Date of publication and mention of the grant of the patent: **12.08.1998**
(21) Application number: 93120175.0
(22) Date of filing: 15.12.1993
(51) Int. Cl.: B32B 27/08, B01L 3/14, C09D 127/08

(54) **Barrier label**
Etikett mit Barriereigenschaften
Etiquette à propiété barrière

(30) Priority: 18.12.1992 US 992990
(43) Date of publication of application: 29.06.1994
(73) Proprietor: Becton, Dickinson and Company, Franklin Lakes, New Jersey 07417-1880 (US)
(72) Inventor: Tropsha, Yelena G., Chapel Hill, North Carolina 27516 (US); Clarke, Richard P., Raleigh, North Carolina 27606 (US); Antoon, Mitchell K., Raleigh, North Carolina 27606 (US)
(74) Representative: von Kreisler, Alek, Dipl.-Chem.

(56) References cited:
- EP-A- 0 358 445
- EP-A- 0 472 499
- EP-A- 0 571 116
- EP-A- 0 580 094
- FR-A- 2 516 860
- GB-A- 1 086 482
- US-A- 4 809 876
- Chemical Abstracts Vol. 104, No. 226075, Derwent AN 86-052275 & JP-61005918 (KUREHA CHEMICAL INDUSTRY CO., LTD.)

## Description

### BACKGROUND OF THE INVENTION

### 1. Field of the Invention

This invention relates to a barrier label for providing an effective barrier against gas and water permeability for containers, especially plastic evacuated blood collection tubes.

### 2. Description of the Related Art

With the increased emphasis on the use of plastic medical products, a special need exists for improving the barrier properties of articles made of polymers.

Such medical products that would derive a considerable benefit from improving their barrier properties include, but are not limited to, collection tubes and particularly those used for blood collection.

Blood collection tubes require certain performance standards to be acceptable for use in medical applications. Such performance standards include the ability to maintain greater than about 90% original draw volume over a one year period, to be radiation sterilizable and to be noninterfering in tests and analysis.

Therefore, a need exists to improve the barrier properties of articles made of polymers and in particular plastic evacuated blood collection tubes wherein certain performance standards would be able to be met and the article would be effective and usable in medical applications.

EP-A-0 472 499 discloses a packing container covered by a label comprising a substrate film, a first layer of a ceramic metal oxide and a second surface layer. The substrate film preferably is a polyolefin film or a polyester film. The surface layer can be a polyester. The ceramic layer preferably is chosen between silicon oxides and aluminum oxides. The label has barrier properties towards gases such as oxygen and vapour. The ceramic layer is deposited by way of a vacuum thin layer technique.

JP-A-61005918 (Chemical Abstract reference 104:226075 and Derwent Abstract reference 86-052275) teaches that one of the surfaces of an unoriented thermoplastic resin film, i.e., a rubber containing PVC sheet, is coated with a specific vinylidene chloride copolymer. In detail, two of said rubber containing PVC sheets are first treated with an adhesive composition and then coated with a copolymer latex of said vinylidene chloride. Subsequently, the coated films are laminated with the vinylidene chloride copolymer layers facing each other, which laminate is then stretched.

### SUMMARY OF THE INVENTION

The present invention relates to a barrier label comprising a polymer film coated with
- a first layer adjacent said polymer film comprising aluminum oxide, silicon oxide or a diamond based composition; and
- a second layer adjacent said first layer comprising vinylidene chloride-acrylonitrile-methyl methacrylate-methyl acrylate-acrylic acid polymer.

The present invention is a plastic composite container covered with the above barrier label. In more detail the present invention is a sample assembly comprising a plastic tube having an open end, a closed end, an inner surface and an outer surface and the barrier label as defined above associated over the outer surface of said tube and extending over a major portion of said outer surface of said tube.

The first layer on the polymer film may preferably be an aluminum oxide based composition, such as AlOₓ wherein x is from 0.3 to 0.9; a silicon oxide based composition; or a diamond based composition. Most preferably, the first layer is an aluminum oxide based composition.

Vinylidene chloride-acrylonitrile-methyl methacrylate-methyl acrylate-acrylic acid polymer is available as DARAN® 8600-C (trademark of W.R. Grace and Co.) sold by GRACE, Organic Chemicals Division, Lexington, Mass.

Suitable polymer films to be coated for use as barrier labels according to the present invention include, but are not limited to polypropylene films, low and high density polyethylene films and poly(ethylene terephthalate) films.

Desirably, the barrier label may be placed or formed around the container and then adhered to the container by methods such as, but not limited to, an adhesive layer, heating the barrier label and container to a temperature sufficient to cause the barrier label to heat-shrink onto the container or by expanding the container into the barrier label by blow molding.

Plastic tubes covered with a barrier label are able to maintain substantially far better vacuum retention and draw volume retention than previous tubes comprised of polymer compositions and blends thereof without a barrier label.

Printing may be placed on the barrier label which is to be used on the container of interest. For example, a product identification, bar code, brand name, company logo, lot number, expiration date and other data and information may all be included on the label surface. Moreover, a matte finish or a corona discharged surface may be developed on the outer surface of the barrier label so as to make the surface appropriate for writing additional information on the label. Furthermore, a pressure sensitive adhesive label may be placed over the outer surface of the barrier coating so as to accommodate various hospital over-labels, for example.

### DESCRIPTION OF THE DRAWINGS

FIG. 1 is a perspective view of a typical blood collection tube with a stopper.

FIG. 2 is a longitudinal sectional view of the tube of FIG. 1 taken along line 2-2.

FIG. 3 is a longitudinal sectional view of a tube-shaped container, similar to the tube of FIG. 1 without a stopper, comprising a barrier label.

FIG. 4 is a longitudinal sectional view of a tube-shaped container, similar to the tube of FIG. 1 with a stopper, comprising a barrier label.

### DETAILED DESCRIPTION

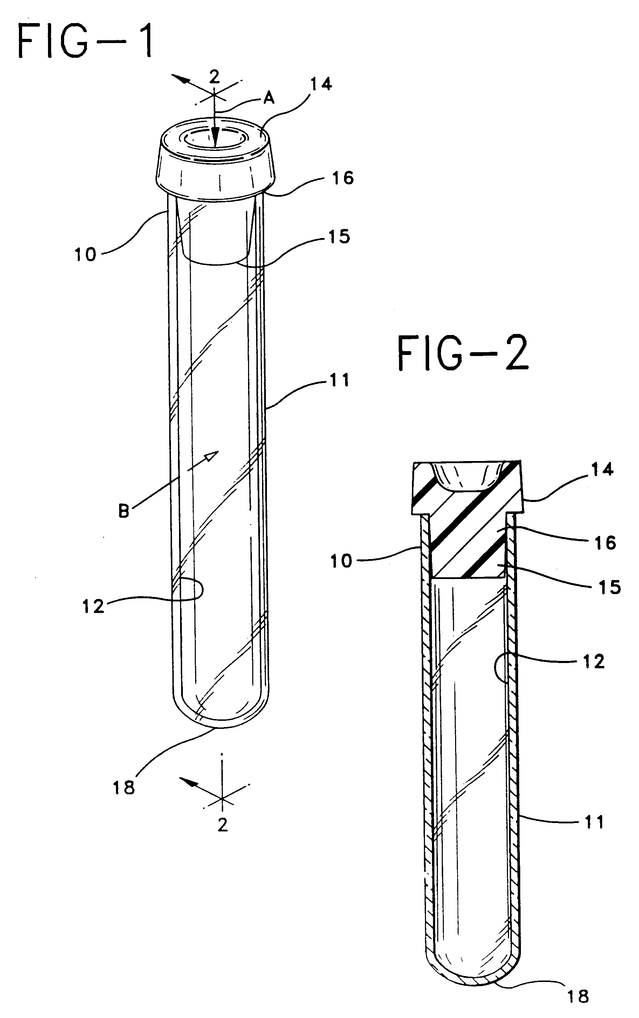

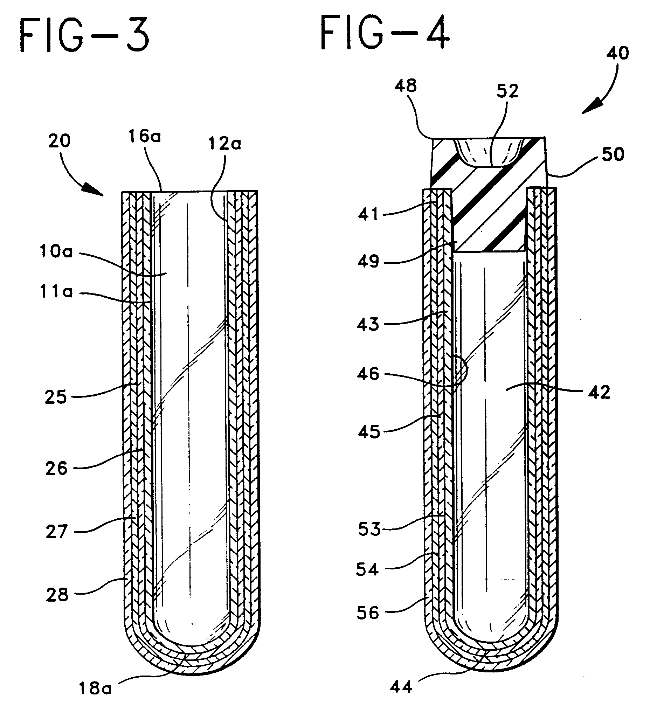

Referring to the drawings in which like reference characters refer to like parts throughout the several views thereof, FIGS. 1 and 2 show a typical sample assembly in the shape of a blood collection tube **10**, having a sidewall **11** extending from an open end **16** to a closed end **18** and stopper **14** which includes a lower annular portion or skirt **15** which extends into and presses against the inner surface **12** of the sidewall for maintaining stopper **14** in place.

FIG. 3 shows the preferred embodiment of the invention, a plastic tube covered with barrier label. The preferred embodiment includes many components which are substantially identical to the components of FIGS. 1 and 2. Accordingly, similar components performing similar functions will be numbered identically to those components of FIGS. 1 and 2, except that a suffix "a" will be used to identify those components in FIG. 3.

Referring now to FIG. 3, the preferred embodiment of the invention, collection tube assembly **20** comprises a plastic tube **10a**, having a sidewall **11a** extending from an open end **16a** to a closed end **18a**. A barrier label **25** extends over a substantial portion of the length of the tube which is upon the outer surface of the tube with the exception of open end **16a**. Barrier label **25** comprises a polymer film **26,** a first layer **27** of an inorganic material and a second layer **28** of a polymer material.

FIG. 4 illustrates an alternate embodiment of the invention, wherein collection tube assembly **40** comprises stopper **48** in place for closing open end **41** of tube **42**. As can be seen, sidewall **43** extends from open end **41** to closed end **44** and stopper **48** includes an annular upper portion **50** which extends over the top edge of tube **42**. Stopper **48** includes a lower annular portion or skirt **49** which extends into and presses against the inner surface **46** of sidewall **43** for maintaining stopper **48** in place and a well **52**.

Covering a substantial portion of the length of the tube is a barrier label **45**. Barrier label **45** covers substantially most of the tube with the exception of open end **41** thereof. Barrier label **45** comprises polymer film **53**, a first layer **54** of an inorganic material and a second layer **56** of a polymer material.

FIG. 4 differs from the embodiment in FIG. 3 in that the tube may be evacuated with the simultaneous placement of stopper **48** therein after the application of barrier label **45** over the tube. Alternatively, the barrier label may be applied to the tube before it has been evacuated.

An alternate embodiment of the invention also includes a barrier label incorporating both the upper portion of the stopper, as well as the entire container tube. Such an embodiment may be utilized, for example, for sealing the container with the stopper in place. Once a sample has been placed in the tube, the sample cannot be tampered with by removal of the stopper. Additionally, serrations could be included at the tube, stopper interface. The serrations may be registered so that it can be determined if the sealed container has been tampered with.

It will be understood by practitioners-in-the-art that such tubes may also contain reagents in the form of additives or coatings on the inner wall of the tube.

The barrier label forms a substantially clear or translucent barrier. Therefore, the contents of a plastic tube covered with a barrier label are substantially visible to the observer; at the same time identifying information may be displayed over the barrier label after it is applied to the plastic tube.

The inorganic material of the barrier label may be formed on a polymer film substrate as a first layer by radio frequency discharge, direct or dual ion beam deposition, sputtering or plasma chemical vapor deposition, as described in U.S.-A-4,698,256, 4,809,876, 4,992,298 and 5,055,318.

The second layer of the barrier label is a vinylidene chloride-acrylonitrile-methyl methacrylate-methyl acrylate-acrylic acid polymer, applied to the first layer by spraying, roll-coating or dip-coating an aqueous emulsion of the polymer, followed by air drying the coating, as described in U.S.-A-5,093,194 and 4,997,859.

The barrier label of the present invention is preferably a polymer film with a first layer material comprising aluminum oxide, and a second layer of vinylidene chloride-acrylonitrile-methyl methacrylate-methyl acrylate-acrylic acid polymer applied to the first layer.

A plastic blood collection tube covered with the barrier label will not interfere with testing and analysis that is typically performed on blood in a tube. Such tests include but are not limited to, routine chemical analysis, biological inertness, hematology, blood chemistry, blood typing, toxicology analysis or therapeutic drug monitoring and other clinical tests involving body fluids. Furthermore, a plastic blood collection tube covered with the barrier label is capable of being subjected to automated machinery such as centrifuges and may be exposed to certain levels of radiation in the sterilization process with substantially no change in optical or mechanical and functional properties.

A plastic blood collection tube covered with the barrier label is able to maintain 90% original draw volume over a period of one year. Draw volume retention depends on the existence of a partial vacuum, or reduced pressure, inside the tube. The draw volume changes in direct proportion to the change in vacuum (reduced pressure). Therefore, draw volume retention is dependent on good vacuum retention. A plastic tube covered with the barrier label substantially prevents gas permeation through the tube material so as to maintain and enhance the vacuum retention and draw volume retention of the tube.

If the barrier label is also applied on the inner surface of the plastic blood collection tube, the barrier label may be hemorepellent and/or have characteristics of a clot activator if the first layer of the barrier coating is a diamond composition.

It will be understood that it makes no difference whether the plastic composite container is evacuated or not evacuated in accordance with this invention. The presence of a barrier label on the outer surface of the container has the effect of maintaining the general integrity of the container holding a sample so that it may be properly disposed of without any contamination to the user. Notable is the clarity of the barrier label applied on the container and its abrasion and scratch resistance.

The barrier label used in accordance with this disclosure, may contain conventional additives and ingredients which do not adversely affect the properties of articles made therefrom.

The polymer film of the barrier label includes, but is not limited to, polymeric substrate resins and polychlorotrifluoroethylene. Polymeric substrate resins include, but are not limited to polyamide styrenic polymers, polyolefin and polyester. Polyamide includes but is not limited to, biaxial oriented nylon and aromatic amorphous polyamide. Styrenic polymers include polystyrene and styrene-butadiene copolymers and mixtures thereof. Polyolefin includes, but is not limited to biaxial oriented polypropylene low density polyethylene and mixtures thereof. Polyester includes, but is not limited to, polyethylene terephthalate, polyethylene naphthalate, polyethylene isophthalate and mixtures thereof.

## Claims

1. A barrier label comprising a polymer film coated with
- a first layer adjacent said polymer film comprising aluminum oxide, silicon oxide or a diamond based composition; and
- a second layer adjacent said first layer comprising vinylidene chloride-acrylonitrile-methyl methacrylate-methyl acrylate-acrylic acid polymer.

2. The barrier label of claim 1 wherein said first layer is silicon oxide.

3. The barrier label of claim 1 wherein said first layer is aluminum oxide.

4. A sample assembly comprising:
a plastic tube having an open end, a closed end, an inner surface and an outer surface; and a barrier label as defined in anyone of claims 1 to 3, associated over the outer surface of said tube and extending over a major portion of said outer surface of said tube.

## Patentansprüche

1. Sperretikett, das eine Polymerfolie umfaßt, die mit
- einer ersten Schicht, die an die Polymerfolie angrenzt und Aluminiumoxid, Siliciumoxid oder eine Zusammensetzung auf Diamantbasis umfaßt, sowie
- einer zweiten Schicht, die an die erste Schicht angrenzt und Vinylidenchlorid-Acrylnitril-Methyl-methacrylat-Methylacrylat-Acrylsäure-Polymer umfaßt,
beschichtet ist.

2. Sperretikett gemäß Anspruch 1, wobei es sich bei der ersten Schicht um Siliciumoxid handelt.

3. Sperretikett gemäß Anspruch 1, wobei es sich bei der ersten Schicht um Aluminiumoxid handelt.

4. Probenanordnung, umfassend:
ein Kunststoffröhrchen mit einem offenen Ende, einem geschlossenen Ende, einer inneren Oberfläche und einer äußeren Oberfläche sowie ein Sperretikett gemäß einem der Ansprüche 1 bis 3, das über die äußere Oberfläche des Röhrchens assoziiert ist und sich über den größten Teil der äußeren Oberfläche des Röhrchens erstreckt.

## Revendications

1. Etiquette barrière comprenant un film polymère revêtu avec
- une première couche adjacente audit film polymère, comprenant une composition à base d'oxyde d'aluminium, d'oxyde de silicium ou de diamant ; et
- une seconde couche adjacente à ladite première couche. comprenant un polymère de chlorure de vinylidène-aciylonitrile-méthacrylate de méthyle-acrylate de méthyle-acide acrylique.

2. Etiquette barrière selon la revendication 1, dans laquelle ladite première couche est de l'oxyde de silicium.

3. Etiquette barrière selon la revendication 1, dans laquelle ladite première couche est de l'oxyde d'aluminium.

4. Ensemble d'échantillon, comprenant :
un tube en matière plastique ayant une extrémité ouverte, une extrémité fermée, une surface interne et une surface externe ; et une étiquette barrière telle que définie dans l'une quelconque des revendications 1 à 3, associée sur la surface externe dudit tube et s'étendant sur une majeure partie de ladite surface externe dudit tube.
